(19)

Europäisches
Patentamt
European
Patent Office
Office européen
des brevets

(11) **EP 1 104 143 B1**

(12) **EUROPEAN PATENT SPECIFICATION**

(45) Date of publication and mention
of the grant of the patent:
**17.06.2009 Bulletin 2009/25**

(51) Int Cl.:
***H04M 1/00*** *(2006.01)* ***G01C 21/20*** *(2006.01)*

(21) Application number: **00309610.4**

(22) Date of filing: **31.10.2000**

(54) **Handheld devices**

Tragbare Vorrichtungen

Dispositifs portables

(84) Designated Contracting States:
**AT BE CH CY DE DK ES FI FR GB GR IE IT LI LU
MC NL PT SE**

(30) Priority: **29.11.1999 GB 9928182**

(43) Date of publication of application:
**30.05.2001 Bulletin 2001/22**

(60) Divisional application:
**09156018.5**

(73) Proprietor: **Nokia Corporation
02150 Espoo (FI)**

(72) Inventors:
• **Kaartinen, Sanna
00140 Helsinki (FI)**
• **Kinnunen, Timo
92430 Paavola (FI)**
• **Lustila, Risto
96400 Rovaniemi (FI)**
• **Salomäki, Lauri
96100 Rovaniemi (FI)**
• **Liukkonen-Olmiala, Tea
90940 Jääli (FI)**

• **Hynninen, Tiina
90500 Oulu (FI)**
• **Pirkola, Jani
58212 Linköping (SE)**
• **Sippola, Leena
90500 Oulu (FI)**
• **Mäntyjärvi, Jani
90230 Oulu (FI)**
• **Mäntyla, Vesa-Matti
Fin-90500 Oulu (FI)**
• **Tuulari, Esa
Fin-90440 Kempele (FI)**
• **Seppänen, Tapio
Fin-90550Oulu (FI)**

(74) Representative: **Style, Kelda Camilla Karen et al
Page White & Farrer
Bedford House
John Street
London, WC1N 2BF (GB)**

(56) References cited:
**EP-A- 0 833 537 EP-A- 1 104 143
WO-A-00/63874 WO-A-99/22338**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to handheld devices and in particular, but not exclusively, to handheld devices such as mobile telephones or the like.

**Background to the Invention**

Wireless cellular telecommunication networks are known. The area covered by a telecommunications network is divided up into a number of cells. Each cell has a base transceiver station associated with it. The base transceiver station is arranged to send signals to and receive signals from mobile stations in the same cell as the respective base station. The signals sent between the mobile stations and the base station permit voice and/or data communications to take place.

In order to prevent the unauthorised use of mobile stations by other people, password protection is used. In order to activate the keyboard and/or allow the user of a mobile phone to make a call, the user has to enter a password. That password consists of a number.

One problem with the use of numbers is that it can be difficult for the user to remember the password. This is both inconvenient and annoying to the user.

Alternative methods of preventing unauthorised use of a mobile phone have been proposed which rely on finger print recognition. The phone can be set up so that it can only be activated if it correctly identifies the user's fingerprint. However, if fingerprint data is stolen, for example, from a central store, it is not possible for the user to alter his fingerprint. Accordingly, the unauthorised use of the mobile phone may not be preventable.

One further problem is that the password used by the user may be simple for an unauthorised person to guess and once the correct password has been guessed, the mobile telephone can be used without the consent of its owner. People often use their birthdays or the name of a pet.

The optimal settings for a mobile telephone, such as its volume level and the like may depend on whether the mobile telephone is stationery, the user is walking, cycling or in a car. Currently, in order to achieve the optimal settings, the user has to change the settings as the environmental changes. This is inconvenient and often the user forgets to do this. The user may forget to change the settings before the user receives a call and the user then has to either alter the settings during the call or conduct the call with the less than optimal settings.

WO-99/22338 discusses a portable computer arranged to rest comfortably in the hand with accelerometers capable of detecting movement of the pen with respect to gravity providing input to a micro controller which selects a response from a number of viewing modes a response.

WO-00/63874 discusses a handhold computer input pointing device having at least one motion detector being capable of detecting motion in at least three dimensions. The pointing device may, for example be used to control a computer executing a program to display a moveable virtual puppet.

**Summary of the Invention**

It is an aim of embodiments of the present invention to address one or more of these problems.

According to one aspect of the present invention, there is provided a device comprising: sensor means for detecting movement of the device; and characterized by trained signal processing means for processing an output of the sensor means, to recognize a predetermined sequence of gestures, wherein the gesture comprises a set of movements. The trained signal processing means may be arranged to determine the orientation of the device. The trained signal processing means may be arranged to recognise at least one predetermined position.

The trained signal processing means may be arranged to determine the current mode of operation of the device. For example, depending on the orientation and/or movement of the device, it is possible to determine if the device is in a meeting mode, a games mode or the like.

Preferably, control means are provided to control the device to provide an associated function when a predetermined sequence of gestures is recognised. For example, the device may be usable only if a predetermined sequence of gestures is recognised. In other words, passwords can be implemented using a predetermined sequence of gestures. The associated function may be a function of the user interface of the device. For example, where the device is a mobile telephone, a predetermined orientation and/or movement may be used to answer a call, close connection, switch off an alarm or the like.

The means for detecting the movement of the device may comprise at least one accelerometer. The means for determining the orientation of the device may comprise at least one accelerometer. In preferred embodiments of the present invention, at least one accelerometer is arranged to provide movement and orientation information. Preferably, three accelerometers are provided which are arranged to provide information in respect of three orthogonal directions.

The trained signal processing means may comprise at least one neural network. The at least one neural network may be used for recognising the orientation of the device. The at least one neural network may use a self organising mapping technique.

The trained signal processing means may comprise at least one pattern recognition system, for example a hidden Markov model.

The predetermined orientation and/or movement of the device may be pre-programmed or alternatively may be programmed into the device by the user or selected by the user.

Preferably, the device is a mobile telephone. It should be appreciated that in alternative embodiments of the invention, the device can be any other suitable device, such as a control device for a game or the like.

According to a second aspect of the present invention, there is provided a method for controlling a device comprising: determining the movement of the device; and characterized by using a trained signal processing method to process the result of the determining step to recognize a sequence of predetermined gestures, wherein the gestures comprise a set of movements.

## Brief Description of the Drawings

For a better understanding of the present invention and as to how the same may be carried into effect, reference will now be made by way of example to the accompanying drawings in which:-

Figure 1 shows a cellular telecommunications network with which embodiments of the present invention can be used;
Figure 2 shows a block diagram of a mobile telephone embodying the present invention;
Figure 3 shows a schematic view of an accelerometer used in the arrangement of Figure 2;
Figure 4 shows an example of signals which are output by the accelerometer in Figure 3; and
Figure 5 illustrates the function provided by the windowing circuitry of Figure 2.

## Detailed Description of Embodiments of the Invention

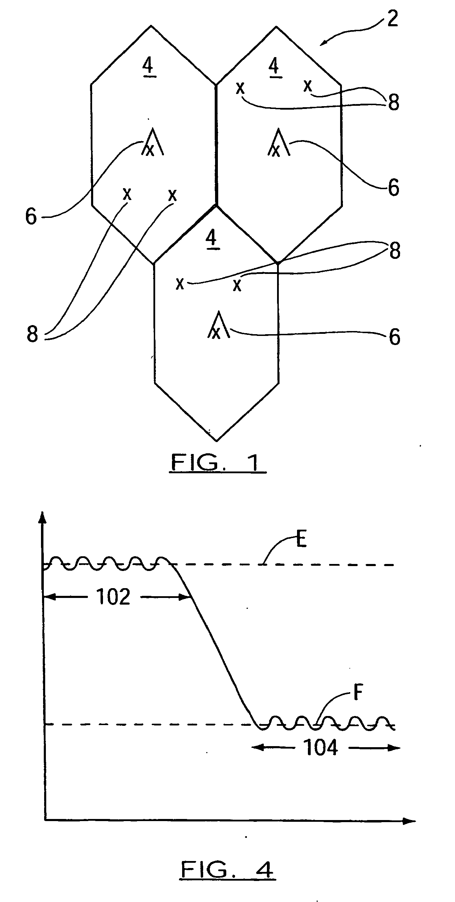

Reference will first be made to Figure 1 which shows a wireless cellular telecommunications network 2. The area covered by the network 2 is divided up into a plurality of cells 4. Each of the cells 4 has associated with it a base transceiver station 6. Each base transceiver station 6 is arranged to communicate with mobile stations 8 in the cell associated with that base transceiver station 6.

The network shown in Figure 1 may use any suitable method of communication for communicating with the mobile stations. In particular, one or more of the following methods may be used: Time Division Multiple Access, Frequency Division Multiple Access, Spread Spectrum Methods such as Code Division Multiple Access or other suitable methods. In some embodiments of the present invention, hybrids of two or more of these access methods may be used.

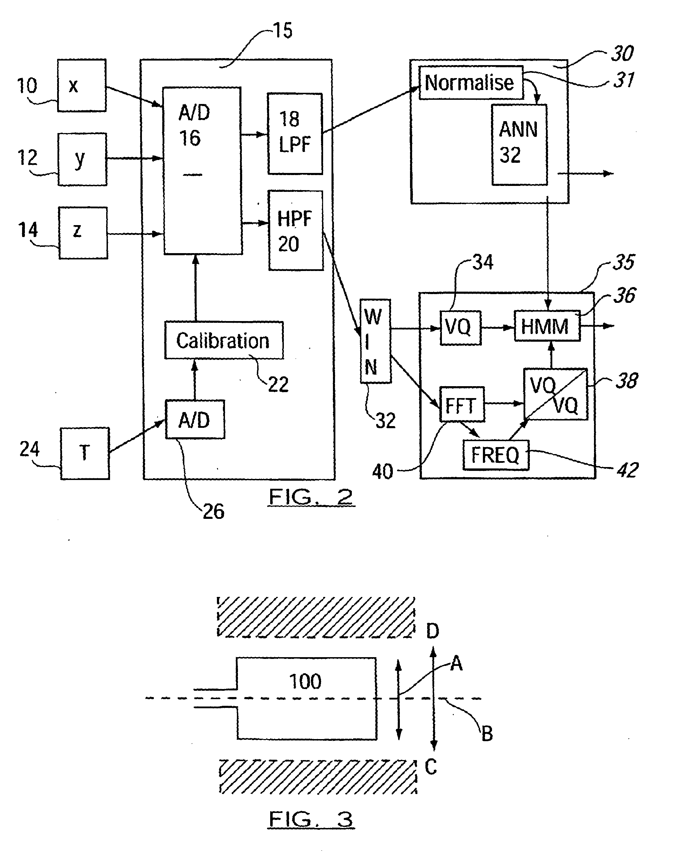

Reference will now be made to Figure 2 which shows an embodiment of the present invention, arranged to be incorporated in a mobile telephone. The elements shown in Figure 2 are arranged to provide information as to the orientation of the mobile telephone and its movement.

The arrangement shown in Figure 2 comprises three accelerometers 10, 12 and 14. The first accelerometer 10 is arranged to detect motion in the X direction. The second accelerometer 12 is arranged to detect motion in the Y direction. The third accelerometer 14 is arranged to detect motion in the Z direction. In other words, the three accelerometers 10, 12 and 14 are each arranged to detect motion in mutually perpendicular directions.

Reference is made to Figure 3, which shows a schematic example of one accelerometer which can be used with embodiments of the invention. The accelerometer comprises a mass 100. The accelerometer shown in Figure 3 is arranged to detect motion in the directions of arrow A. When there is no motion in the directions of arrow A and there are no external forces on the mass in the directions of arrow A, the mass will be in its rest position shown in Figure 3. However, when there is movement in the direction of arrow A, the mass will move about the rest position indicated by dotted line B. It should be appreciated that if gravity provides a force in one of the directions of arrow A, the rest position will be above or below line B, depending on the orientation of the sensor.

Reference is made to Figure 4 which shows an output of the accelerometer shown in Figure 3. The sensor is initially oriented in such a way that there is a force on the mass 100 in one of the directions of arrow A due to gravity. The part of the graph 102 represents the condition where the sensor is in one orientation such that it is affected by gravity in one of the directions of arrow A and there is movement in at least one of the directions of arrow A. The part of the graph referenced 104 shows the output of the accelerometer when the sensor is in the opposite orientation so that gravity still affects the sensor but in the other direction of arrow A. This can be because the phone has been turned upside down. There is also movement in at least one of the directions of arrow A. Thus, graph 102 can be said to be when gravity acts in the direction of arrow C whilst part of the graph referenced 104 is where gravity acts in the direction of arrow D.

As can be seen in Figure 4, the part of the graph referenced 102 provides a signal based about a centre point represented by line E whilst the part of the graph referenced 104 provides the signal centred about the line F. Lines E and F provide information about the position of the phone whilst the signals themselves provide information about the amount of movement. It should be appreciated that depending on the orientation of the phone, the signals can be centred about different lines which will be between lines E and F. This is because lines E and F represent the two extreme positions.

Each of the sensors shown in Figure 2 provides a signal of the type shown in Figure 4 but for the three orthogonal directions X, Y and Z. The signals thus provide information about the position of the phone in the X, Y and Z directions as well as information about movement of the phone in the X, Y and Z directions.

In preferred embodiments of the present invention, accelerometers such as the ADXL 202 made by Analog devices may be used. Any other type of accelerometer can be used which may use different techniques in order to sense gravity to provide position information and acceleration to provide movement information.

The output of the accelerometers 10 to 14 are input to an analog to digital converter 16 which converts the analog outputs of the accelerometers into digital signals. It should be appreciated that in alternative embodiments of the present invention, the accelerometers may provide digital outputs, in which case the analogue to digital converter can be omitted. In still further embodiments of the present invention, it may be possible to process the analog outputs of the accelerometer in their analog form and thus the need for the analog to digital converter can be avoided.

The operation of the accelerometers 10 to 12 will depend on the temperature of the environment in which the mobile telephone is located. The temperature sensor 24 thus measures the temperature inside the mobile station. The temperature sensor 24 may take any suitable format. The output of the temperature sensor 24 is connected to an analog to digital converter 26. The output of the temperature sensor 24 is an analog signal which is converted by the analog to digital converter 26 to a digital signal.

The digital signal representing the temperature of the mobile phone is input to a calibration arrangement 22. This calibration unit 22 provides a correction output which is used to correct the digital signals representing the output of the accelerometers 10 to 14. In this way, the influence of temperature on the accelerometers can be disregarded so that a more accurate evaluation of the movement and position of the mobile telephone can be made.

The calibration unit 22 can take any suitable format. For example, the calibration unit can take the form of a look up table, with the digital output of the analog to digital converter 26 providing an address to the look up table. Alternatively, the calibration unit may perform an algorithm which calculates the compensation required based on the output of the analog to digital converter 26. The calibration unit 22 can of course use a combination of an algorithm and a look up table.

The analog to digital converter 16 connected to the accelerometers 10 to 14 provides two identical outputs. Each output contains a digital representation of each of the three outputs of the three accelerometers 10 to 14.

One of the outputs is connected to a low pass filtering arrangement 18. The low pass filter is arranged to remove frequency components above a given cut of frequency. For example, with the signal shown in Figure 4, the low pass filter 18 will remove the part of the signal above line E for the part of the signal referenced 102 and will remove the part of the signal above line F for the part of the signal referenced 104. The function of the low pass filter 18 is effectively to allow the middle positions of each portion of the output from each sensor to be determined as this provides information as to the position of the mobile telephone. Alternatively, a DC estimator can be used to provide orientation information.

In the example shown in Figure 4, lines E and F are straight lines. However, it should be appreciated that depending on the motion of the mobile telephone, the line about which the signals are centred may be curved or any other possible shape.

The output of the low pass filter 18 is input to a position recognition system 30 in a post processing layer 28. The position recognition system 30 includes an artificial neural network 32. The neural network 32 is trained to identify the position of the mobile telephone based on the filtered outputs which it receives from the low pass filter 18 for each of the three sensors. For example, one combination of values from the three accelerometers 10 to 14 will be provided when the mobile phone is lying flat on a table with its display uppermost. A different combination of outputs from the three accelerometers will be provided when the mobile phone is in a vertical position and so on.

Any suitable type of artificial neural network ANN or pattern recognition unit can be used. By way of example, the artificial neural network 32 that can be used is the self organising map proposed by Kohonen. Another example of an ANN is a multi layer perception neural network. This ANN is used for pattern recognition and feature extraction. In embodiments of the present invention, this ANN is able to extract information relating to the position of the mobile phone.

A self organising map SOM is a neural network which forms spatially organised feature maps from an N dimensional input signal in an unsupervised manner. In the embodiment of the present invention, N is equal to 3 with information being provided by each of the three sensors. The method used by the self organising map is similar to human sensory input mapping in the brain, which is then organised topographically. During training, weight sectors $w_{ji}(n)$ of the network are shifted closer to the input sectors X by

$$w_{ji}(n+1)=w_{ji}(n)+k(n)n_{j.1(x)}(n)(x-w_{j1}(n)).$$

where $w_{ji}(n+1)$ is the updated weight vector, $k(n)$ the learning rate and $n_{j.1(x)}(n)$ the neighbourhood function. The learning rate and the neighbourhood function are changed as the training proceeds. After self-organization the hand labelled training data presented to the SOM again and labels are suggested for the winning neurons with their immediate neighbours. All suggestions are collected for each neuron, after which majority voting is performed for final labelling.

The three dimensional sensor data is normalized prior to the ANN, that is the mean and variance are calculated and used for computing the normalization. A normalization block 31 can be implemented into the position recognition system 30. The normalisation block 31 receives the output of the low pass filter 18 and the output of the normalisation block is input to the ANN.

The artificial neural network unit 32 is arranged to provide two functions, feature extraction and classification. Feature extraction allows the neural network to process the information which it has received. The output is then classified so that it can be determined what has occurred. In one embodiment of the present invention, the neural network 32 is trained to identify the following positions:

the mobile phone is in an orientation with the display upwards,
the mobile phone is in an orientation with the display downwards,
the mobile telephone has a typical in the pocket orientation,
the mobile phone is being held to the user's left ear,
the mobile phone is being held to the user's right ear,
the mobile phone is in an orientation on its left side,
the mobile phone is in an orientation on its right side,
the mobile phone is standing, and
the mobile phone is upside down.

It should of course be appreciated that embodiments of the present invention may be used to identify a larger range of orientations of the mobile station or indeed any orientation of the mobile station.

In one embodiment of the present invention, the self organising map used is a two dimensional hexagonal grid arranged to be seven neurons by seven neurons. The parameters of the self organisation map are shown in table 1 below.

**Table 1**

| Parameter | Value/Argument |
|---|---|
| Map lattice | Hexagonal |
| Initialization type | Linear |
| Size of the map | 7x7 |
| Initial and final learning radiuses | [3 1] |
| Initial learning rate | 0.03 |
| Learning rate | Linear |
| Neighbourhood function | epanechnikov |

The signals from the accelerometers are sampled. In one embodiment they are sampled with a frequency of 90Hz. The input to the low pass filter 18 starts a sequence of vectors of the following form:

$$P_n=[x_n y_n z_n]^T,$$

where $X_n$, $Y_n$ and $Z_n$ are acceleration signals in X, Y and Z directions at a discrete time N. In the low pass filter 18, each vector component is filtered and normalised separately. A low pass filtering is carried out using, in one embodiment of the present invention, a fourth order Butterworth filter of the type IIR. A 3-dB cut off frequency of 2.5Hz was used in one preferred embodiment of the present invention. The variance of each component is normalised to 1 and the mean to zero. The processed components of each vector are recombined to a sequence of 3 dimensional feature vectors $P'_n$.

The feature vector $P'_n$ at time N is input to a 2 dimensional feature map of the artificial neural network 32. This produces an index $I_n$ representing the training data cluster in question. The resulting sequences of self organising map indices $I_n$ is interpreted by the classifier which assigns a label to each index according to the training data. Each label suggests a specific gesture or position of the mobile telephone, for example display up etc. Finally, a majority voting is formed among the label sequence to recognise the gesture.

The position recognition system 30 provides two outputs. The first output provides position information on the phone which can be used as required. The second output is to a dynamic acceleration recognition system 35 which will be discussed in more detail hereinafter.

One example of an artificial neural network is a multi layer perception network **(MLP)**. This has three input layer neurons, ten hidden layer neurons and six output layer neurons. The network can produce position data as number sequences of six numbers. Each number can represent a different one of the positions. For example:

- Display up: 001000
- Display down: 100000
- Device standing: 000100
- Bottom up: 010000
- Sideways to the left: 000001
- Sideways to the right: 000010

The output of the analog to digital converter 16 connected to the outputs of the accelerometers 10 to 14 is also connected to a high pass filter or AC estimator 20. The high pass filter is arranged to remove the effects of, for example, gravity from the signal. In the case of the signal shown in Figure 4, the high pass filter 20 is arranged so that the first part of the signal 102 and the second part of the signal 104 are centred about a common line having a zero or similar value. If the signal is such that the centre line curves, again, the signal will be filtered such that the signal is centred about a straight horizontal line at the same zero or other reference point. This is because the signals are being used to identify information relating to the movement of the mobile telephone and not its position.

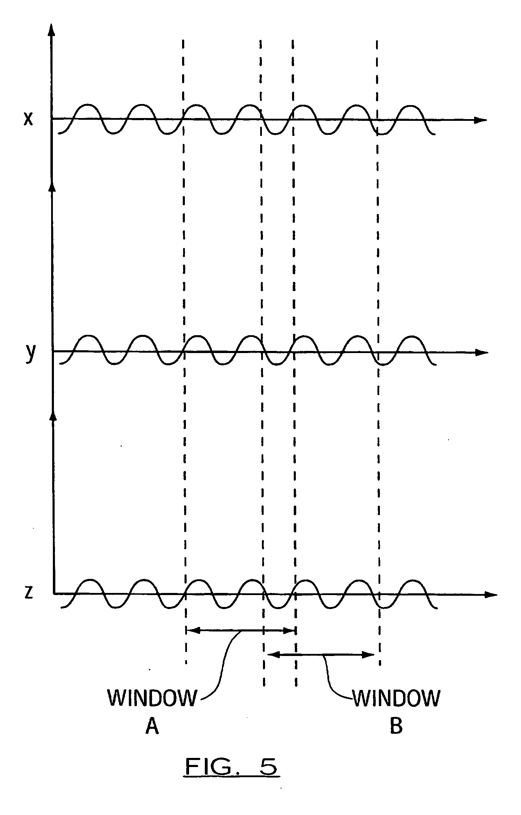

The output of the high pass filter 20 is input to a windowing unit 32. The windowing unit 32 receives three signals, an example of which is shown in Figure 5. One signal represents the output of the X accelerometer 10, the second input represents the output of the Y accelerometer 12 and the third input represents the output of the Z accelerometer 14. Each of the signals is centred about a zero level. The windowing unit 32 defines a window. The signals within a window are processed together in order to obtain the required information. As can be seen from Figure 5, the first window shown, window A overlaps slightly with the next window, window B. It should be appreciated that all of the signals output by the high pass filter will be divided into windows for processing. The filtering may use any form of DSP filters.

The output of the windowing unit 32 is connected to the dynamic acceleration recognition system 35. One output of the windowing unit 32 is input to a first vector quantization unit 34. The vector quantization unit 34 quantizes the signals received in a given window into a plurality of vectors each having an X, an Y and an Z value. The values are derived from the respective X, Y and Z signals. The quantized signals are output to a second pattern recognition system 36. This system is, in preferred embodiments of the present invention, a hidden Markov Model (HMM).

The windowing unit 32 also provides an output to a fast Fourier transform unit 40. This unit converts the received signals from the time to the frequency domain. The output of the fast Fourier transform unit 40 is input to a frequency peak estimate unit 42. The frequency peak estimate unit 42 identifies, for each of the X, Y and Z signals the highest frequency. The identified highest frequency for each of the X, Y and Z signals is output to a second vector quantization unit 38. This quantizes the output of the frequency peak estimate unit 42 and outputs it to the HMM 36.

The fast Fourier transform unit 40 also outputs the X, Y and Z signals in the frequency domain to the second vector quantization unit 38 which also quantizes the three X, Y and Z signals and outputs them to the neural network 36.

Based on the information which the neural network receives from the first and second vector quantization units 38 and from the position recognition system 30, the neural network 36 is able to identify how the mobile station is moving.

The hidden Markov model 36 is a stochastic process with an underlying process of transitions between hidden states of the system and a process of emitting observable outputs. When the outputs are discrete symbols, this is referred to as discrete HMM. The state transitions form a first order discrete Markov process with a transition probability distribution A and in an initial state distribution $\pi$. The observable process of emitting symbols can be presented as an observation symbol distribution B. Thus each HMM $\lambda$ can be represented as a triplet-$\lambda=(A, B, \pi)$. In the embodiment of the present invention, Baum-Welch and Viterbi algorithms have been used for the training and recognition tasks. The loq-Viterbi form of the Viterbi algorithm has been used as this is economic with computational processing. Before training, the initialisation of the HMM parameters were carried out as follows:

    1. The initial state probability for the first state was set to 1.

2. The transition probability distribution for each state was set uniformerly distributed; and

3. Any topologically allowable state transition from individual states was given probabilities of the form 1/(amount of allowable state - transitions from state).

A HMM with a left right topology is used for modelling time series whose properties change sequentially over time. This model was used in one embodiment of the present invention. In one implementation, left-right HMM models with 7 states were used. It has been found that the number of states was not particularly critical and that there was little difference between choosing five or four states on the recognition ability of the system. Any other type of HMM may be used in alternative embodiments of the invention.

A collection of the three dimensional acceleration data is performed with a 100Hz sampling rate. As described previously, each signal from the X, Y and Z accelerometers 12 to 14 are separately filtered with the high pass filter 20. In particular, a fourth order low pass Butterworth filter with a 3dB cut off frequency of 4Hz is used. The signal was decimated at 1/6 times the original rate.

The HMM 36 detects the usable signal, this is also referred to as gesture segmentation. For individual gestures, normalisation of each component to a zero mean and unit variants is performed.

The vector quantization units 34 effectively act as a code book. Discrete code book indices correspond to the observable symbols and are input to the HMM both in the training and test phase. The indices are computed by vector quantization in the first vector quantization unit 34 of the 3D input vectors of the acceleration signals from the accelerometers. The code book used by the vector quantization units is constructed by uniformerly quantizing the 3D feature space. The uniform quantization is advantageous because the acceleration trajectory in the feature space can pass through any point with equal probability within the region defined by the application. The maximum values of each acceleration component was searched in the measured training data in order to define the parallelogram of activity in the feature space. In one preferred embodiment of the present invention, the code book was of 512 3 dimensional code words. The larger the size of the code book, the more accurate the recognition capability of the recognition system. Accordingly, the degree of recognition which is required will determine the size of the code book.

The vector quantization carried out by both of the vector quantization units is performed in a conventional way by selecting the code book entry containing the closest code word to the input vector in the Euclidean sense.

The HMM 36 can thus be trained to recognise certain gestures or movements of the phone. This will rely on a combination of information relating to the position of the mobile telephone and the movement of the mobile phone. For example, using information on the position and/or movement of the mobile station, it is possible to identify the following:

1. The user is holding the phone in front of him and watching the display. This can be while the user is moving or stationary.

2. The phone is lying on the table with its display downwards.

3. The phone is against the ear of a user with the user either stationary or moving.

4. The phone is in a pocket of a user with the user moving.

5. A ringing phone, which is in a right hand side of a belt box with the display turned towards the user is taken into the right hand and the number of the caller is checked by looking at the display. After this, the phone is returned to the belt holder.

6. A ringing phone, which is in a right hand side belt with display towards the user is taken into the right hand and the number of the caller is checked by the user viewing the display. After this, the user opens the line by pressing the corresponding button on the user interface and brings the phone up to his right ear.

7. The phone call ends, the phone is taken from the ear and the line is shut down by activating a button on the interface. Finally, the phone is put back into the belt box.

8. A ringing phone, which is on the desk with its display facing up is taken into the right hand and the number of the caller is checked by watching. After this, the phone is put back on the desk in the same position.

9. A ringing phone, which is on the desk with its display facing upwards is taken into the right hand and the number of the caller is checked by watching. After this, the user opens the line by pressing the corresponding button on the interface and moves the phone to the right ear.

10. The phone call ends, the phone is taken from the ear and the line is shut down by activating a button on the display. Finally, the phone is put back on the desk with its display up.

These are just some of the examples of different movements of the phone which can be identified by the ANN 32 and/or the HMM 36.

The information provided by the post processing layer 28 including the neural network and HMM can be used in a number of different ways. For example, information as to the movement of the user can be ascertained. For example, it is possible to identify whether the user is moving or stationary. If the user is moving, it is possible to identify the type of movement and thus to identify if the user is walking, running, cycling, or in a car or the like. It is then possible to automatically select the settings of the user so as to optimise the quality with which the user is able to make and receive calls. For example, if the user is moving, it may be harder for the user to hear the ringing tone of the phone. Accordingly, the volume of the ringing tone may be automatically increased.

In one embodiment of the invention, information on the type of movement of the user may be sent to the base station which uses that information for determining the base station with which the mobile station is to communicate, when handoff should occur or the like.

In one embodiment of the present invention, the neural networks can be trained to recognise certain gestures and to control the phone accordingly. For example, instead of a number which is input to the user interface to provide password protection, a gesture can be used. For example, the gesture may consist of the user signing his name in the air or against a surface with the mobile phone. Alternatively, the gesture may comprise a set of movements.

Using the position and movement neural networks, the HMM is able to identify when the user performs the password gesture and to allow the phone to be used when that gesture has been detected.

It should be appreciated that the neural network is able to identify the gesture from the movement of the phone and the position of the phone over a period of time. Typically, but not always, the gesture will span several windows.

Gestures can also be used to achieve certain functions. For example, a series of gestures may be used to automatically answer the phone, for example, a phone could be shaken in a particular way for a predetermined number of times.

It is in fact possible to allow the user to control virtually any aspect of the operation of the phone which can be usually controlled via the user interface using an associated gesture. The user can select his own gestures. He will need to train the neural network to recognise the gesture by repeating the gesture a number of times. The neural network will then learn to recognise that gesture and when that gesture is recognised causes the associated function to occur.

Gesture based passwords can be used by a group of users to share some data. In this case, information to train the neural network to recognise the gesture may be transmitted to the mobile station or mobile stations from base stations.

In an alternative application of this, the gesture password may be used to generate a game. For example, a user may transmit a ciphered file to the mobile phone of friend along with associated gesture password information. The friend may then try to get the right gesture in order to access the ciphered file. The mobile station can be programmed to provide audio or visual indicators as to whether or not there is a match and how similar the gestures are. The mobile station can also be arranged to give the friend hints or the like.

It should be appreciated that the gestures can be in two or three dimensions. The gestures can be in the air or against a surface. For example, the antenna of a phone could be used as a pen like member.

In one embodiment of the present invention, the user may move the phone, for example as a pen to write messages in the air or against the surface. The information which is drawn or written by the user may be displayed on the display. In more sophisticated embodiments of the present invention, the letters which are written are recognised. In this way, a simple way to generate text messages is provided without having to use the keyboard which can be time consuming given that there are usually only a limited number of keys.

The neural network can be trained so as to take into account the speed at which a gesture is formed and only to recognise that gesture if the timing is similar to that which has been prestored. However, in alternative embodiments of the present invention, the neural network can be trained so as to ignore differences in timing.

The password can be arranged to protect any suitable resource, such as access to the mobile telephone itself, access to the SIM card or access to a file.

Embodiments of the present invention are applicable not only to mobile telephones but any other suitable hand held device. These hand held devices may be provided with accelerometers such as discussed hereinbefore.

One example of an alternative device is one which includes an integrated alarm clock. That might be switched off by a shaking type of gesture. It should be appreciated that some mobile telephones may incorporate an alarm clock.

Embodiments of the invention may be used with devices such as Tamogochi toys where the users has to provide a feedback in response to certain stimuli. The gestures can provide the feedback with different gestures being used for different feedback responses.

Gestures can be carried out in order to permit data to be logged in an automatic diary, reminder system or context aware applications.

It should be appreciated that in certain embodiments of the present invention, the gestures used by the user can be changed either for variety or for security purposes.

It should be appreciated that the neural networks provide a degree of tolerance for the matching of the performed gesture and the known gesture. In some embodiments of the present invention, the degree of tolerance which is allowable can be adjusted by the user.

In preferred embodiments of the present invention, the mobile telephone or similar device will be sold with at least part trained neural networks. However, in alternative embodiments, the user may do some or all of the training. The training can be done at the device itself. The training can also be done as follows:

- The device logs the sensor data during a gesture.
- The data is sent to a network server which carries out the required training.
- The server sends the ANN source code to the device. In this way, a new gesture can be recognised. This can be quicker than training in device itself.

Gesture recognition can be used in order to control dialling functions of a mobile phone. It is also possible to use gesture recognition in order to play games with mobile telephones or any other such devices. The information from the accelerometers can be used to control the interface of the mobile phone in a number of ways. Games can be played by tilting the mobile station and detecting that movement and position. Dialling can be achieved by for example shaking. Certain positions of the phone can cause certain modes to incur and so on.

In the embodiment described hereinbefore, discrete HMM is used. If continuous HMM is used, effective quantization would not be required.

Embodiments of the present invention can be used to provide an automatic antitheft alarm system. For example, if the device is used with the incorrect gesture or is moved when it should be stationary, an alarm can be set.

In another embodiment of the present invention, the device is a hand held device which acts as a control device, for example for a game or the like. The control device may be wired or wireless. The device can therefore act as a joystick or the like.

It should be appreciated that any alternative neural network to the artificial neural network or HMM network described in the embodiment of the present invention can be used in embodiments of the present invention. Multiple parallel recognition systems (ANNs and/or HMMs) can be used depending on the operating state of the device.

In an alternative embodiment of the invention, the device or mobile telephone may have different modes. Those modes may for example be meeting mode, games mode or any other different modes. The gestures, orientations or movements which are detected in the different modes may result in different functions in different modes. Of course some gestures, movements or positions may have no significance in some modes. The neural networks may be trained to determine the mode from the position and/or movement of the device. For example, in a meeting mode, the mobile telephone may be stationary and lying on a horizontal surface with its display mode upwards.

**Claims**

1.  A device comprising sensor means (10, 12, 14) for detecting movement of the device and **characterized by** trained signal processing means (30, 35) for processing an output of the sensor means (10, 12, 14), to recognize a predetermined sequence of gestures, wherein the gesture comprises a set of movements.

2.  A device as claimed in claim 1, wherein said trained signal processing means (15, 30, 35) are arranged to determine the orientation of the device.

3.  A device as claimed in claim 1, wherein said trained signal processing means is arranged to determine the current mode of operation of said device.

4.  A device as claimed in claim 1, wherein control means are provided to control the device to provide an associated function when the predetermined sequence of gestures is recognised.

5.  A device as claimed in claim 4, wherein said device is usable only if the predetermined sequence of gestures is recognised.

6.  A device as claimed in claim 4, wherein said associated function is a function of a user interface of said device.

7.  A device as claimed in claim 1, wherein said sensor means for detecting the movement of the device comprises at least one accelerometer.

8.  A device as claimed in claim 7, wherein three accelerometers are provided which are arranged to provide information in respect of three orthogonal directions.

9.  A device as claimed in claim 1 to 8, wherein said trained signal processing means comprises at least one neural network.

10. A device as claimed in claim 2, wherein said trained signal processing means comprises at least one neural network for recognising the orientation of said device.

**11.** A device as claimed in claim 10, wherein the at least one neural network uses a self organising mapping technique.

**12.** A device as claimed in claim 1, wherein said trained signal processing means (15, 30, 35) comprises at least one pattern recognition system.

**13.** A device as claimed in claim 12, wherein the at least one pattern recognition system uses a hidden Markov model (30).

**14.** A device as claimed in claim 1 to 13, wherein the device is a mobile telephone.

**15.** A device as claimed in claim 2, wherein the predetermined orientation and/or movement of the device is pre-programmed.

**16.** A device as claimed in claim 1, wherein the device is arranged to recognise the predetermined sequence of gestures of the device which is selected by the user.

**17.** A method for controlling a device comprising:

determining the movement of the device; and
**characterized by** using a trained signal processing method to process the result of the determining step to recognize a sequence of predetermined gestures, wherein the gestures comprise a set of movements.

**18.** A method for controlling a device as claimed in claim 17, further comprising:

controlling the device in response to the determined orientation and/or movement of the device.

**19.** A method as claimed in claim 18, wherein controlling the device comprises, an associated function when a predetermined sequence of gestures is recognised.

**20.** A method as claimed in claim 17, wherein said trained signal processing method uses at least one neural network (32).

**21.** A method as claimed in claim 17, wherein said trained signal processing method uses at least one pattern recognition system.

**Patentansprüche**

**1.** Vorrichtung, umfassend Sensormittel (10, 12, 14), um Bewegung der Vorrichtung zu erfassen, und **gekennzeichnet durch** Trainingssignal-Verarbeitungsmittel (30, 35) zum Verarbeiten einer Ausgabe der Sensormittel (10, 12, 14), um eine vorbestimmte Abfolge von Handbewegungen zu erkennen, wobei die Handbewegung einen Satz von Bewegungen umfasst.

**2.** Vorrichtung wie beansprucht in Anspruch 1, wobei die Trainingssignal-Verarbeitungsmittel (15, 30, 35) eingerichtet sind, um die Ausrichtung der Vorrichtung zu bestimmen.

**3.** Vorrichtung wie beansprucht in Anspruch 1, wobei die Trainingssignal-Verarbeitungsmittel eingerichtet sind, um den derzeitigen Betriebsmodus der Vorrichtung zu bestimmen.

**4.** Vorrichtung wie beansprucht in Anspruch 1, wobei Steuermittel bereitgestellt sind, um die Vorrichtung zu steuern, um eine zugeordnete Funktion bereitzustellen, wenn die vorbestimmte Abfolge von Handbewegungen erkannt wird.

**5.** Vorrichtung wie beansprucht in Anspruch 4, wobei die Vorrichtung nur verwendbar ist, wenn die vorbestimmte Abfolge von Handbewegungen erkannt wird.

**6.** Vorrichtung wie beansprucht in Anspruch 4, wobei die zugeordnete Funktion eine Funktion einer Benutzerschnittstelle der Vorrichtung ist.

**7.** Vorrichtung wie beansprucht in Anspruch 1, wobei die Sensormittel zum Erfassen der Bewegung der Vorrichtung mindestens einen Beschleunigungsmesser umfassen.

**8.** Vorrichtung wie beansprucht in Anspruch 7, wobei drei Beschleunigungsmesser bereitgestellt sind, die eingerichtet sind, um Informationen bezüglich drei orthogonaler Richtungen bereitzustellen.

**9.** Vorrichtung wie beansprucht in Ansprüchen 1 bis 8, wobei die Trainingssignal-Verarbeitungsmittel mindestens ein neuronales Netz umfassen.

**10.** Vorrichtung wie beansprucht in Anspruch 2, wobei die Trainingssignal-Verarbeitungsmittel mindestens ein neuronales Netz umfassen, das zum Erkennen der Ausrichtung der Vorrichtung bereitgestellt ist.

**11.** Vorrichtung wie beansprucht in Anspruch 10, wobei das mindestens eine neuronale Netz eine selbst organisierende Abbildungstechnik verwendet.

**12.** Vorrichtung wie beansprucht in Anspruch 1, wobei die Trainingssignal-Verarbeitungsmittel (15, 30, 35) mindestens ein Mustererkennungssystem umfassen.

**13.** Vorrichtung wie beansprucht in Anspruch 12, wobei das mindestens eine Mustererkennungssystem ein Hidden-Markov-Modell (30) verwendet.

**14.** Vorrichtung wie beansprucht in Ansprüchen 1 bis 13, wobei die Vorrichtung ein Mobiltelefon ist.

**15.** Vorrichtung wie beansprucht in Anspruch 2, wobei die vorbestimmte Ausrichtung und/oder Bewegung der Vorrichtung vorprogrammiert ist.

**16.** Vorrichtung wie beansprucht in Anspruch 1, wobei die Vorrichtung eingerichtet ist, um die vorbestimmte Abfolge von Handbewegungen der Vorrichtung zu erkennen, ausgewählt durch den Benutzer.

**17.** Verfahren zum Steuern einer Vorrichtung, umfassend:

Bestimmen der Bewegung der Vorrichtung; und
**gekennzeichnet durch** Verwendung eines Trainingssignal-Verarbeitungsverfahrens, um das Ergebnis des Bestimmungsschrittes zu verarbeiten, um eine Abfolge von vorbestimmten Handbewegungen zu erkennen, wobei die Handbewegungen einen Satz von Bewegungen umfassen.

**18.** Verfahren zum Steuern einer Vorrichtung wie beansprucht in Anspruch 17, ferner umfassend:

Steuern der Vorrichtung in Reaktion auf die bestimmte Ausrichtung und/oder Bewegung der Vorrichtung.

**19.** Verfahren wie beansprucht in Anspruch 18, wobei das Steuern der Vorrichtung eine zugeordnete Funktion umfasst, wenn eine vorbestimmte Abfolge von Handbewegungen erkannt wird.

**20.** Verfahren wie beansprucht in Anspruch 17, wobei das Trainingssignal-Verarbeitungsverfahren mindestens ein neuronales Netz (32) verwendet.

**21.** Verfahren wie beansprucht in Anspruch 17, wobei das Trainingssignal-Verarbeitungsverfahren mindestens ein Mustererkennungssystem verwendet.

## Revendications

**1.** Dispositif comprenant des moyens de détection (10, 12, 14) pour détecter un mouvement du dispositif et **caractérisé par** des moyens éduqués de traitement du signal (30, 35) pour traiter une sortie des moyens de détection (10, 12, 14), pour reconnaître une séquence prédéterminée de gestes, dans lequel le geste comprend un ensemble de mouvements.

**2.** Dispositif selon la revendication 1, dans lequel lesdits moyens éduqués de traitement du signal (15, 30, 35) sont prévus pour déterminer l'orientation du dispositif.

3. Dispositif selon la revendication 1, dans lequel lesdits moyens éduqués de traitement du signal sont prévus pour déterminer le mode de fonctionnement courant dudit dispositif.

4. Dispositif selon la revendication 1, dans lequel des moyens de commande sont fournis afin de contrôler le dispositif dans le but de fournir une fonction associée lorsque la séquence de gestes prédéterminée est reconnue.

5. Dispositif selon la revendication 4, dans lequel ledit dispositif est utilisable seulement si la séquence de gestes prédéterminée est reconnue.

6. Dispositif selon la revendication 4, dans lequel ladite fonction associée est une fonction d'une interface utilisateur dudit dispositif.

7. Dispositif selon la revendication 1, dans lequel lesdits moyens de détection d'un mouvement du dispositif comprennent au moins un accéléromètre.

8. Dispositif selon la revendication 7, dans lequel trois accéléromètres sont fournis, lesquels sont disposés pour fournir une information relative à trois directions orthogonales.

9. Dispositif selon l'une des revendications 1 à 8, dans lequel lesdits moyens éduqués de traitement du signal comprennent au moins un réseau neural.

10. Dispositif selon la revendication 2, dans lequel lesdits moyens éduqués de traitement du signal comprennent au moins un réseau neural pour reconnaître l'orientation dudit dispositif.

11. Dispositif selon la revendication 10, dans lequel l'au moins un réseau neural utilise une technique de carte auto-organisatrice.

12. Dispositif selon la revendication 1, dans lequel lesdits moyens entraînés de traitement du signal (15, 30, 35) comprennent au moins un système de reconnaissance de motif.

13. Dispositif selon la revendication 12, dans lequel l'au moins un système de reconnaissance de motif utilise un modèle de Markov caché (30).

14. Dispositif selon l'une des revendications 1 à 13, dans lequel le dispositif est un téléphone mobile.

15. Dispositif selon la revendication 2, dans lequel l'orientation et/ou le mouvement prédéterminé du dispositif est préprogrammé.

16. Dispositif selon la revendication 1, dans lequel le dispositif est disposé pour reconnaître la séquence prédéterminée de gestes du dispositif qui est sélectionnée par l'utilisateur.

17. Procédé de commande d'un dispositif comprenant:

la détermination du mouvement du dispositif; et
**caractérisé par** l'utilisation d'une méthode de traitement du signal par apprentissage pour traiter le résultat de l'étape de détermination afin de reconnaître une séquence prédéterminée de gestes, dans lequel les gestes comprennent un ensemble de mouvements.

18. Procédé de commande d'un dispositif selon la revendication 17, comprenant en outre:

la commande du dispositif en réponse à l'orientation et/ou au mouvement déterminé du dispositif.

19. Procédé selon la revendication 18, dans lequel la commande du dispositif comprend, une fonction associée lorsqu'une séquence prédéterminée de gestes est reconnue.

20. Procédé selon la revendication 17, dans lequel la méthode de traitement du signal par apprentissage utilise au moins un réseau neural (32).

21. Procédé selon la revendication 17, dans lequel la méthode de traitement du signal par apprentissage utilise au moins un système de reconnaissance de motif.

FIG. 1

FIG. 4

FIG. 2

FIG. 3

WINDOW
A

WINDOW
B

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9922338 A

- WO 0063874 A